# EUROPÄISCHE PATENTSCHRIFT

(11) **EP 3 835 120 B1**
(45) Veröffentlichungstag und Bekanntmachung des Hinweises auf die Patenterteilung: **10.05.2023**
(21) Anmeldenummer: 20208702.9
(22) Anmeldetag: 19.11.2020
(51) Int. Cl.: B60N 2/14, B60N 2/24

(54) **SITZVORRICHTUNG FÜR EINE BAUMASCHINE**
SEATING DEVICE FOR A CONSTRUCTION MACHINE
DISPOSITIF FORMANT SIÈGE POUR UNE MACHINE DE CONSTRUCTION

(30) Priorität: 09.12.2019 DE 102019133569
(43) Veröffentlichungstag der Anmeldung: 16.06.2021
(73) Patentinhaber: Hamm AG, 95643 Tirschenreuth (DE)
(72) Erfinder: Reif, Gernot, 91058 Erlangen (DE); Reber, Stefan, 92715 Püchersreuth (DE)
(74) Vertreter: dompatent von Kreisler Selting Werner - Partnerschaft von Patent- und Rechtsanwälten mbB

(56) Entgegenhaltungen:
- DE-A1- 2 151 969
- DE-A1- 2 245 530
- DE-A1-102004 054 144
- JP-A- H09 109 746
- JP-A- 2009 149 220
- JP-A- 2009 262 803

## Beschreibung

Die Erfindung betrifft eine Baumaschine mit einer Sitzvorrichtung zur Positionierung eines Sitzes.

Insbesondere im Erdbau, kommen häufig Baumaschinen zum Einsatz, an die hinsichtlich Sicherheit und Komfort bei der Bedienung durch einen Fahrzeugführer besondere Anforderungen gestellt werden. Beispielsweise arbeitet ein Bodenverdichter zur Bearbeitung von Erdreich indem das Erdreich mehrmals überfahren wird, um die gewünschte Endverdichtung und Ebenheit der Flächen herzustellen. Dabei wird häufig die Fahrtrichtung gewechselt. Der Anteil der Vorwärts- und Rückwärtsfahrten ist in der Regel annähernd gleich. Derartige Baumaschinen in Form von Straßenwalzen sind beispielsweise aus EP 1 573 134 B1 bekannt.

Ein sicheres und komfortables Bedienen der Baumaschine in beide Fahrtrichtungen ist somit wünschenswert. Dazu müssen einerseits die wesentlichen Bedienelemente der Baumaschine für den Fahrzeugführer gut erreichbar sein und dürfen in ihrer Funktionalität nicht beeinträchtigt oder versehentlich betätigt werden. Andererseits muss die Sicht des Fahrzeugführers in beide Fahrtrichtungen möglich sein, damit der Fahrzeugführer die Situation außerhalb der Baumaschine in beide Fahrtrichtungen erkennen kann.

Aus dem Stand der Technik, beispielsweise aus DE 20 2010 015 414 U1, EP 2 899 318 B1 und EP 3 112 207 B1, sind Baumaschinen bekannt, die einen horizontal verschiebbaren und um eine Drehachse des Sitzes drehbaren Sitz aufweisen. Ferner ist aus EP 1 573 134 B1 eine Baumaschine bekannt, bei der die Bedienelemente in einen drehbaren Sitz integriert sind, wobei die Stellbewegungsrichtung der Bedienelemente in jeder Sitzdrehposition mit der Fahrtrichtung der Baumaschinen übereinstimmt.

Ein wesentlicher Nachteil der aus dem Stand der Technik bekannten Sitzvorrichtungen ist es, dass die Sitzverschiebung und Sitzdrehung in zwei getrennten Bedienschritten erfolgt. Ein Fahrzeugführer hat dabei in der Regel zunächst die Sitzverschiebung durchzuführen, bevor die Sitzdrehung eingestellt werden kann. Die Möglichkeit zur Sitzdrehung kann, je nach dem in welcher Position sich der Sitz befindet, eingeschränkt sein. Eine optimale Sitzpositionierung kann somit nur unter Zeitaufwand und äußerst umständlich erfolgen. Da im Baubetrieb oftmals Arbeitsschritte unter Zeitdruck durchzuführen sind, werden die Positioniermöglichkeiten der Sitze, häufig auf Kosten der Sicherheit, nur unzureichend genutzt.

Unfälle und Probleme, die aufgrund einer unzureichenden Einstellung der Sitzposition aufgetreten sind, haben die Notwendigkeit aufgezeigt, dass im Hinblick auf die Sicherheit und den Komfort bei der Bedienung einer Baumaschine Handlungsbedarf besteht. Beispielsweise können am Sitz angeordnete Bedienelemente beim Verschieben oder Drehen des Sitzes, je nach Sitzposition, mit dem Führerhaus des Fahrzeugführers kollidieren. Es besteht dadurch ein erhebliches Risiko, dass Bedienelemente unerwünscht betätigt werden, was zu schwerwiegenden Unfällen führen kann. Ferner kann die Bedienbarkeit der Bedienelemente durch räumliche Begrenzung des Führerhauses eingeschränkt oder behindert werden. Eine Sitzvorrichtung für eine Fahrerkabine, die die Merkmale der in dem Oberbegriff von Anspruch 1 beschriebenen Sitzvorrichtung aufweist is aus DE 22 45 530 A1 bekannt. Verschwenkbare Sitzvorrichtungen für Personenkraftwagen sind aus JP 2009 149220 A, JP 2009 262803 A und DE 21 51 969 A1 bekannt. JP H09 109746 A beschreibt eine verschwenkbare Sitzvorrichtung für einen Lastkraftwagen. DE 10 2004 054144A1 offenbaren eine verschwenkbare Sitzvorrichtung für eine landwirtschaftliches Fahrzeug.

Der Fahrzeugführer hat sich je nach Fahrtrichtung eine gute Sicht nach außen zu verschaffen, um die Baumaschine sicher führen zu können. Bei Rückwärtsfahrten führt dies in der Regel zur Einnahme einer nicht ergonomischen und unkomfortablen Sitzhaltung durch den Fahrzeugführer. Je nach Dauer einer Rückwärtsfahrt kann dies dazu führen, dass der Fahrzeugführer, auf Kosten der Sicht nach hinten, vorübergehend eine komfortablere Haltung einnimmt. Es besteht somit Optimierungsbedarf bei der Positionierung von Sitzen in Baumaschinen.

Der Erfindung liegt daher die Aufgabe zugrunde, eine Baumaschine mit einer Sitzvorrichtung zur Positionierung des Sitzes in Baumaschinen zu schaffen, durch die die Betriebssicherheit und der Bedienkomfort erhöht wird.

Zur Lösung dieser Aufgabe dienen die Merkmale des Anspruchs 1.

Bei der erfindungsgemäßen Baumaschine mit einer Sitzvorrichtung weist die Sitzvorrichtung eine Positioniervorrichtung und eine Sitzkonsole mit einem darauf angeordneten Sitz auf, wobei die Positioniervorrichtung einen ersten Schwenkarm und einen zweiten Schwenkarm zum Führen der Sitzkonsole entlang einer kurvenförmigen Bewegungsbahn aufweist, wobei die Schwenkarme jeweils ein erstes Ende und ein zweites Ende aufweisen, wobei das jeweils erste Ende der Schwenkarme über jeweils ein erstes Drehgelenk an der Positioniervorrichtung gelagert ist, wobei die ersten Drehgelenke der Schwenkarme einen Abstand A₁ aufweisen, und das jeweils zweite Ende der Schwenkarme voneinander beabstandet über jeweils ein zweites Drehgelenk mit der Sitzkonsole verbunden ist, wobei die zweiten Drehgelenke der Schwenkarme einen Abstand A₂ aufweisen, wobei der Abstand des ersten Drehgelenks des ersten Schwenkarms zum zweiten Drehgelenk des ersten Schwenkarms der Abstand L₁₁ ist, und der Abstand des ersten Drehgelenks des zweiten Schwenkarms zum zweiten Drehgelenk des zweiten Schwenkarms Abstand L₁₂ ist, und wobei die ersten Drehgelenke in Fahrtrichtung versetzt zueinander angeordnet sind und/oder L₁₁ ≠ L₁₂ gilt, wobei die Sitzkonsole beim Positionieren ausgehend von einer Grundposition entlang der kurvenförmigen Bewegungsbahn bewegt wird und dabei aufgrund der kurvenförmigen Bewegungsbahn nach innen zu einer Längsmittelebene der Positioniervorrichtung hin eingedreht wird. Vorzugsweise entspricht die Längsmittelebene der Positioniervorrichtung der Längsmittelebene der Baumaschine. Die Sitzkonsole wird beim Positionieren aus Sicht eines Fahrzeugführers ausgehend von der Grundposition nach vorne links verschoben und gleichzeitig nach rechts eingedreht in Richtung einer linksseitigen Endposition und nach vorne rechts verschoben und nach links eingedreht wird in Richtung einer rechtsseitigen Endposition. Die Sitzkonsole ist in der linksseitigen Endposition um mindestens 70° nach rechts gedreht und in der rechtsseitigen Endposition um mindestens 15° nach links gedreht.

Die Grundposition ist dabei die Position, in der die Sitzkonsole bei normaler Geradeaus-Fahrt angeordnet ist, so dass die Sitzkonsole in Fahrtrichtung ausgerichtet ist. Vorzugsweise entspricht in der Grundposition die Sitzrichtung der Fahrtrichtung. Der Sitz kann mindestens eine Armlehne und/oder mindestens eine Bedienkonsole aufweisen, die mit dem Sitz bewegt wird bzw. werden.

Durch die erfindungsgemäße Anordnung wird eine Bewegungsbahn definiert, entlang der die Sitzkonsole zusammen mit einem darauf befindlichen Sitz positionierbar ist. Außerhalb der vorgegebenen Bewegungsbahn ist keine Positionierung des Sitzes möglich. Die Positionierung der Sitzkonsole entlang der Bewegungsbahn umfasst eine gleichzeitige Verschiebung und Drehung der Sitzkonsole. Das heißt, die Sitzkonsole wird beim Positionieren relativ zum Führerhaus verschoben und gleichzeitig gedreht, wobei die Verschiebung und Drehung der Sitzkonsole in derselben Ebene erfolgen.

Durch das Vorsehen unterschiedlicher Abstände L₁₁ und L₁₂ und/oder das in Fahrtrichtung versetzte Anordnen der ersten Drehgelenke der Schwenkarme ist die Bewegungsbahn kurvenförmig ausgebildet, so dass die Sitzkonsole bei der Positionierung ausgehend von einer Grundposition, bei der die Sitzkonsole in Fahrtrichtung ausgerichtet ist, von der Längsmittelebene der Positioniervorrichtung nach außen und nach vorne in Fahrtrichtung bewegt wird und dabei gleichzeitig nach innen zur Längsmittelebene der Positioniervorrichtung eingedreht wird. Mit anderen Worten: Die Sitzkonsole wird beim Positionieren aus Sicht eines Fahrzeugführers ausgehend von der Grundposition nach vorne links bzw. vorne rechts verschoben und gleichzeitig nach rechts bzw. links eingedreht. Eine derartige Bewegungsbahn ermöglicht einem Fahrzeugführer hinsichtlich des Sichtfelds und des Komforts besonders vorteilhafte Sitzpositionen einzunehmen.

Die erfindungsgemäße Sitzvorrichtung ermöglicht es ferner, dass die Positionierung des Sitzes, der auf der Sitzkonsole angeordnet ist, in einem einzigen Arbeitsschritt erfolgen kann. Die Positionierung der Sitzkonsole und des darauf angeordneten Sitzes entlang der vordefinierten kurvenförmigen Bewegungsbahn erfolgt kollisionsfrei. Insbesondere kann durch die vordefinierte Bahn in vorteilhafter Weise eine Kollision von am Sitz angeordneten Bedienelementen mit dem Führerhaus des Fahrzeugführers vermieden werden. Die Betriebssicherheit des Fahrzeugs ist somit gegenüber bekannten Sitzvorrichtungen deutlich erhöht. Ferner kann die Sitzeinstellung zeitsparend erfolgen, da die Verschiebung und Drehung der Position des Sitzes nicht in zwei separaten Schritten, sondern in einem einzigen Schritt erfolgt. Ferner wird durch die erfindungsgemäße Sitzvorrichtung der Bedienkomfort in vorteilhafter Weise erhöht. Durch die einfache Einstellmöglichkeit der Position des Sitzes kann ein Fahrzeugführer beispielsweise auch für nur kurze Rückwärtsfahrten auf effiziente Weise den Sitz Positionieren und eine ergonomische Körperhaltung einnehmen. Die körperliche Belastung eines Fahrzeugführers wird somit in vorteilhafter Weise verringert. Es hat sich herausgestellt, dass die Sicht nach rechts und nach hinten bei einer Drehung des Sitzes um 70° nach rechts ausreichend ist, um dem Fahrzeugführer eine gute Sicht zu verschaffen und eine hohe Sicherheit zu gewährleisten. Es hat sich ferner herausgestellt, dass die Sicht nach links bei einer Drehung des Sitzes um 15° nach links ausreichend ist.

Besonders bevorzugt ist die erfindungsgemäße Sitzvorrichtung ausschließlich mechanisch. Ausschließlich mechanische Lösungen sind die gegenüber elektrischen Lösungen robuster und kostengünstiger. Grundsätzlich ist aber auch eine motorgetriebene Ausführungsform möglich.

Vorzugsweise liegt die kurvenförmige Bewegungsbahn, auf der die Sitzkonsole positionierbar ist, in einer Ebene orthogonal zur Längsmittelebene der Positioniervorrichtung, die vorzugsweise der Längsmittelebene der Baumaschine entspricht. Mit anderen Worten erfolgt die Positionierung der Sitzkonsole im Wesentlichen parallel zu einem Untergrund, auf der sich die Baumaschine befindet.

Zur Erhöhung der Sicherheit, insbesondere zur Gewährleistung einer verbesserten Sicht des Fahrzeugführers bei Rückwärtsfahrten, genügt eine Positionierung des Sitzes in einer einzigen Ebene, die im Wesentlichen parallel zum Untergrund verläuft, auf dem sich die Baumaschine befindet. Dadurch ist es möglich, die Komplexität des Aufbaus der Positioniervorrichtung gering zu halten. Zugleich ist die Positioniervorrichtung dadurch auf einfache Art und Weise an verschiedene Baumaschinen anpassbar und somit vielseitig einsetzbar. Dies kann beispielsweise durch die Verwendung von Drehgelenken mit jeweils zueinander parallelen Drehachsen realisiert werden.

Vorzugsweise ist vorgesehen, dass sich der erste und der zweite Schwenkarm bei der Positionierung der Sitzkonsole entlang des gesamten Verlaufs der kurvenförmigen Bewegungsbahn nicht kreuzen.

Es kann ferner vorgesehen sein, dass die zweiten Drehgelenke in Sitzrichtung mit gleichem Abstand von der Vorderkante der Sitzkonsole beabstandet sind. Mit anderen Worten verläuft eine Verbindungslinie der zweiten Drehgelenke der Schwenkarme parallel zur Vorderkante der Sitzkonsole. Die Vorderkante der Sitzkonsole verläuft dabei, wenn sich die Sitzkonsole in einer Grundposition befindet, in der die Sitzrichtung der Fahrtrichtung entspricht, orthogonal zu der Längsmittelebene der Baumaschine.

Vorzugsweise weisen die zweiten Drehgelenke einen Abstand A₂ auf, wobei gilt: L₁₁ > A₂ > 0,1L₁₁ und/oder L₁₂ > A₂ > 0,1L₁₂, vorzugsweise L₁₁ > A₂ > 0,3L₁₁ und/oder L₁₂ > A₂ > 0,3L₁₂, besonders bevorzugt L₁₁ > A₂ > 0,5 L₁₁ und/oder L₁₂ > A₂ > 0,5 L₁₂.

Durch den Abstand A₂ wird das Verhältnis zwischen dem Grad der Drehung und der Verschiebung der Sitzkonsole festgelegt. Durch eine geeignete Wahl des Abstands A₂ lässt sich somit einstellen, wie stark die Sitzkonsole bei einer Bewegung der Sitzkonsole entlang der kurvenförmigen Bewegungsbahn gedreht wird. Der Abstand A₂ gemäß den genannten Kriterien hat sich besonders vorteilhaft erwiesen.

Besonders bevorzugt befindet sich das zweite Drehgelenk des ersten Schwenkarms bei der Bewegung der Sitzkonsole stets zwischen einer ersten Ebene und einer zweiten Ebene, wobei die erste Ebene parallel zur Längsmittelebene der Positioniervorrichtung liegt und sich durch das erste Drehgelenk des ersten Schwenkarms erstreckt, und wobei die zweite Ebene parallel zur Längsmittelebene der Positioniervorrichtung liegt und sich durch das erste Drehgelenk des zweiten Schwenkarms erstreckt. Vorzugsweise befindet sich das zweite Drehgelenk des zweiten Schwenkarms bei der Bewegung der Sitzkonsole zwischen der ersten und zweiten Ebene sowie auf der von der ersten Ebene abgewandten Seite der zweiten Ebene. Vorzugsweise weisen die ersten Drehgelenke einen Abstand A₁ auf, wobei gilt: A₁ > 0,5L₁₁ und A₁ > 0,5L₁₂, vorzugsweise A₁ > L₁₁ und A₁ > L₁₂.

Durch diese Anordnung wird erreicht, dass bei einer Bewegung der Sitzkonsole aus der Grundposition in Fahrtrichtung nach links, der erste Schwenkarm die Sitzkonsole am zweiten Drehgelenk des ersten Schwenkarms von der Positioniervorrichtung wegdrückt, wodurch ein Drehen der Sitzkonsole nach rechts (in mathematisch negative Richtung) erfolgt. Umgekehrt, wird bei einer Bewegung der Sitzkonsole aus der Grundposition in Fahrtrichtung nach rechts, erreicht, dass der erste Schwenkarm die Sitzkonsole am zweiten Drehgelenk des ersten Schwenkarms zur Positioniervorrichtung hin zieht, wodurch ein Drehen der Sitzkonsole nach links (in mathematisch positive Richtung) erfolgt.

Durch die Begrenzung der Schwenkbahn des ersten Schwenkarms kann ferner auf einfache Weise eine Kollision der Sitzkonsole und des darauf angeordneten Sitzes mit der Wandung des Führerhauses während der Positionierung vermieden werden. Gleichzeitig wird der Raum im Führerhaus optimal genutzt, um es einem Fahrzeugführer zu ermöglichen, eine hinsichtlich Sicherheit und Komfort vorteilhafte Sitzposition einzunehmen.

Vorzugsweise ist vorgesehen, dass die Befestigungspositionen der ersten Drehgelenke an der Positioniervorrichtung veränderbar sind, wobei die ersten Drehgelenke an unterschiedlichen Positionen befestigbar sind. Beispielsweise können in der Positioniervorrichtung Langlöcher vorgesehen sein, in denen die ersten Drehgelenke der Schwenkarme verschiebbar sind, wobei die ersten Drehgelenke innerhalb der Langlöcher an unterschiedlichen Positionen befestigt werden können. Alternativ kann die Positioniervorrichtung ein Lochmuster mit mehreren Löchern an unterschiedlichen Positionen aufweisen, in denen die ersten Drehgelenke der Schwenkarme befestigt werden können.

Die Bewegungsbahn der Sitzkonsole ist durch eine geeignete Veränderung der Befestigungspositionen der ersten Drehgelenke der Schwenkarme an die räumlichen Gegebenheiten im Führerhaus einer Baumaschine anpassbar. So kann beispielsweise ein geeigneter Versatz der ersten Drehgelenke ausgewählt werden, um den räumlichen Grenzen des Führerhauses Rechnung zu tragen. Insbesondere kann die Bewegungsbahn, auf der die Sitzkonsole positionierbar ist, derart festgelegt werden, dass die Positionierung des Sitzes kollisionsfrei erfolgen kann. Die Sitzvorrichtung muss somit nicht für jede Baumaschine speziell konstruiert werden, sondern ist vielseitig anpassbar. Auch bei Baumaschinen, die bereits mit einer erfindungsgemäßen Sitzvorrichtung ausgestattet sind, kann es innerhalb deren Nutzungsdauer zu einer Veränderung der räumlichen Gegebenheiten kommen. Beispielsweise kann es infolge einer Modernisierung zu einer Veränderung von Bedienelementen kommen. Eine Veränderung der Befestigungspositionen der ersten Drehgelenke der Schwenkarme ermöglicht es, die Bewegungsbahn, entlang derer die Sitzkonsole positionierbar ist, an die neue Gegebenheiten anzupassen und weiterhin eine kollisionsfreie Positionierung der Sitzkonsole zu gewährleisten. Somit verleiht die veränderbare Lagerung der ersten Drehgelenke der Sitzvorrichtung eine erhöhte Vielseitigkeit. Die einfache zugrundeliegende Kinematik ermöglicht ferner eine platzsparende und kostengünstige Konstruktion der Sitzvorrichtung.

Es kann ferner vorgesehen sein, dass die Positioniervorrichtung eine Begrenzungseinrichtung aufweist, durch die die Bewegungsbahn der Sitzkonsole, vorzugsweise an beiden Enden, begrenzt ist.

Durch das Vorsehen einer Begrenzungseinrichtung können die Grenzen der Bewegungsbahn an die räumlichen Gegebenheiten in einem Führerhaus einer Baumaschine angepasst werden. Somit ist es auf einfache Weise möglich, Kollisionen beim Positionieren der Sitzkonsole auszuschließen.

Besonders bevorzugt kommt bzw. kommen der erste und/oder zweite Schwenkarm an den jeweiligen Grenzen der Bewegungsbahn mit der Begrenzungseinrichtung in Kontakt, um eine weitere Bewegung der Sitzkonsole zu begrenzen.

Vorzugsweise ist die Begrenzungseinrichtung aus mindestens zwei Anschlägen gebildet, wobei die Bewegungsbahn der Sitzkonsole in jede Bewegungsrichtung durch mindestens einen Anschlag begrenzt ist. Vorzugsweise wirken der erste und der zweite Schwenkarm jeweils mit einem Anschlag zusammen, sodass die Bewegung der Sitzkonsole in eine Richtung durch Anschlagen des ersten Schwenkarms an einem Anschlag und in die andere Richtung durch Anschlagen des zweiten Schwenkarms an dem anderen Anschlag begrenzt wird. Alternativ kann die Bewegungsbahn der Sitzkonsole durch Zusammenwirken von nur einem der beiden Schwenkarme mit beiden Anschlägen begrenzt werden.

Die Anschläge weisen vorzugsweise Pufferelemente auf, die beispielsweise aus einem elastischen Material bestehen.

Das Vorsehen von Anschlägen ist eine einfache und kostengünstige Möglichkeit zur Begrenzung der Bewegungsbahn der Sitzkonsole. Insbesondere kann die Begrenzung der Bewegungsbahn durch ein Zusammenwirken der Anschläge mit den Schwenkarmen auf einfache Weise verwirklicht werden. Durch das Vorsehen von Pufferelementen an den Anschlägen kann Anschlagen der Schwenkarme an den Grenzen der Bewegungsbahn sanft und nahezu geräuschlos erfolgen. Dadurch werden der Komfort und die Sicherheit der Sitzvorrichtung weiter erhöht.

Vorzugsweise weist die Sitzvorrichtung eine Feststellvorrichtung auf, mit der die Position der Sitzkonsole gegenüber der Positioniervorrichtung feststellbar ist. Die Feststellvorrichtung ist vorzugsweise an der Sitzkonsole angeordnet. Beispielsweise kann das Feststellen der Position der Sitzkonsole durch einen Formschluss zwischen Feststellvorrichtung und Positioniervorrichtung erfolgen. Alternativ kann das Feststellen auch durch einen Reibschluss zwischen Feststellvorrichtung und Positioniervorrichtung erfolgen.

Das Vorsehen einer Feststellvorrichtung ermöglicht es einem Fahrzeugführer, nach erfolgter Positionierung der Sitzkonsole, die Position der Sitzkonsole festzustellen, so dass keine weitere unerwünschte Bewegung erfolgen kann. Dadurch werden die Handhabbarkeit und Sicherheit der Sitzvorrichtung erhöht.

Ferner kann vorgesehen sein, dass die Positioniervorrichtung eine Grundplatte mit mindestens einer Aussparung aufweist, und die Feststellvorrichtung ein Arretierelement aufweist, wobei die Position der Sitzkonsole gegenüber der Positioniervorrichtung durch ein Eingreifen des Arretierelements in die mindestens eine Aussparung, feststellbar ist.

Die Aussparung ist vorzugsweise durch ein Loch gebildet. Das Arretierelement ist vorzugsweise durch einen vorstehenden Vorsprung gebildet.

Durch eine derartige Anordnung ist das Feststellen der Position der Sitzkonsole in einer gewünschten Position auf besonders einfache Weise möglich. Das formschlüssige Eingreifen des Arretierelements in die Aussparung ist weitestgehend wartungsfrei und robust gegen Verschmutzungen.

Besonders bevorzugt weist die Grundplatte der Positioniervorrichtung mindestens drei Aussparungen auf, wobei eine linksseitige Endposition, eine rechtsseitige Endposition und die Grundposition der Sitzkonsole durch jeweils eine Aussparung vorgegeben ist.

Die Anzahl der Aussparungen, die vorzugsweise durch Löcher gebildet sind, ist an die Bedürfnisse des Benutzers und an die jeweilige Baumaschine, beispielsweise an die Größe der zu führenden Baumaschine, anpassbar. So können bei Bedarf auch mehr als drei Aussparungen vorgesehen werden.

Es kann ferner vorgesehen sein, dass die Feststellvorrichtung ein Betätigungselement zum Herbeiführen und Aufheben einer Feststellung aufweist. Vorzugsweise ist das Betätigungselement durch einen Hebel gebildet.

Mittels eines Betätigungselements, beispielsweise eines seitlich an der Sitzkonsole angeordneten Hebels, lässt sich die Positionierung der Sitzkonsole auf einfache Weise durchführen. Das Herbeiführen und Aufheben der Feststellung können dabei einhändig und besonders intuitiv erfolgen. Somit wird die durch die Positionierung der Sitzkonsole verursachte Ablenkung des Fahrzeugführers geringgehalten.

Es kann ferner vorgesehen sein, dass der erste und/oder zweite Schwenkarm eine abgewinkelte und/oder gebogene Form aufweist.

Durch eine abgewinkelte und/oder gebogene Form der Schwenkarme kann die Sitzvorrichtung besonders platzsparend ausgeführt werden. Ferner wird, wenn die Schwenkarme in einer Ebene angeordnet sind, eine Kollision der Schwenkarme vermieden. Ferner ist es, im Falle der Verwendung von Anschlägen zur Begrenzung der Bewegungsbahn, auf einfach Weise möglich, die Bewegung der Schwenkarme mittels Anschlägen zu begrenzen, da durch eine geeignete Form der Schwenkarme die Grenzen der Bewegungsbahn beeinflussbar sind, an denen die Schwenkarme an die Anschläge anschlagen.

Die erfindungsgemäße Baumaschine kann insbesondere eine Erdbaumaschine, vorzugsweise ein Walzenzug, sein.

Im Folgenden wird unter Bezugnahme auf die nachfolgenden Figuren eine Sitzvorrichtung einer Baumaschine gemäß einer bevorzugten Ausführungsform der Erfindung näher erläutert. Es zeigen:
- Figur 1: eine schematische Ansicht eines Führerhauses einer Baumaschine mit einer Sitzvorrichtung gemäß der bevorzugten Ausführungsform,

- Figur 2: eine schematische Ansicht einer Sitzvorrichtung gemäß der bevorzugten Ausführungsform,
- Figur 3: eine schematische Draufsicht einer sich in linksseitiger Endposition befindlichen Sitzvorrichtung gemäß einer bevorzugten Ausführungsform,
- Figur 4: eine schematische Draufsicht einer sich in rechtsseitiger Endposition befindlichen Sitzvorrichtung gemäß einer bevorzugten Ausführungsform.

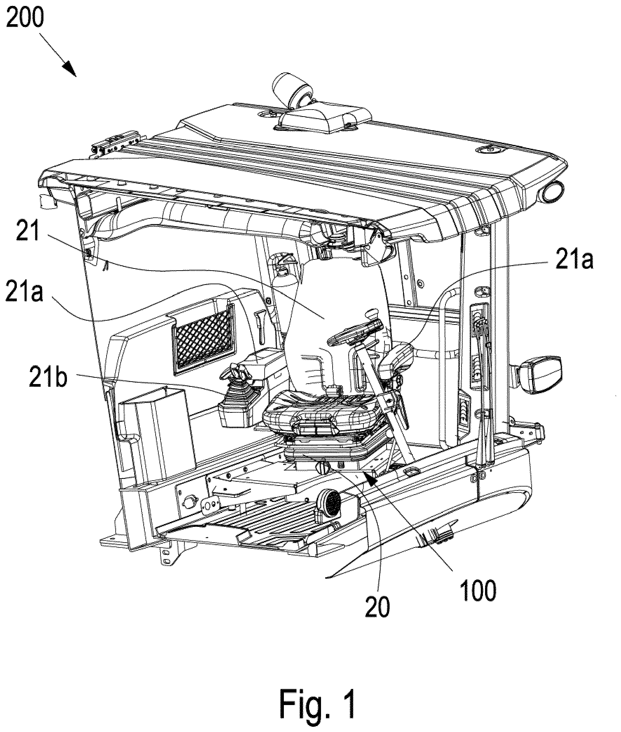

In Figur 1 ist ein Führerhaus 200 einer Baumaschine dargestellt. Die Baumaschine kann beispielsweise ein Walzenzug sein. In dem Führerhaus 200 befindet sich eine Sitzvorrichtung 100 nach der bevorzugten Ausführungsform der vorliegenden Erfindung mit einer Sitzkonsole 20 und einem auf der Sitzkonsole 20 angeordneten Sitz 21, auf dem ein Fahrzeugführer sitzen kann. Der Sitz 21 weist Armlehnen 21a und Bedienelemente 21b zur Bedienung der zu führenden Baumaschine auf.

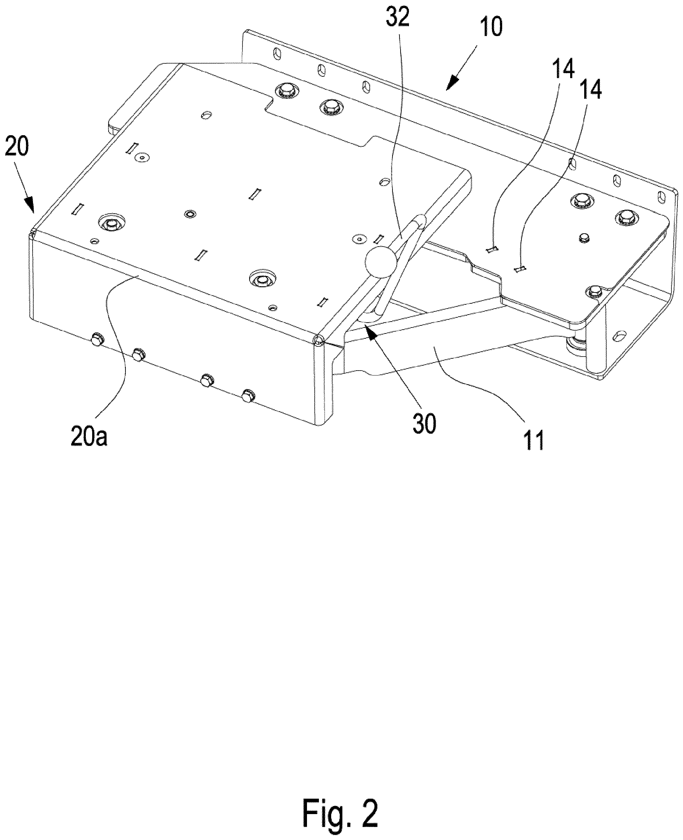

Figur 2 zeigt die Sitzkonsole 20 zusammen mit einer Positioniervorrichtung 10, die sich beispielsweise unterhalb der Sitzkonsole 20 im Führerhaus 200 angeordnet sein kann. Die Positioniervorrichtung 10 ist im montierten Zustand der Sitzvorrichtung 100 am Führerhaus 200 montiert, wobei auf der Sitzkonsole 20 ein Sitz 21 angeordnet ist. Die Positioniervorrichtung 10 weist einen ersten Schwenkarm 11 und einen in Figur 2 nicht dargestellten zweiten Schwenkarm 12 auf, an deren Enden jeweils ein erstes Drehgelenk 1a, 2a bzw. zweites Drehgelenk 1b, 2b angeordnet ist. Die Schwenkarme 11, 12 verbinden jeweils die Positioniervorrichtung 10 mit der Sitzkonsole 20 und ermöglichen ein Positionieren der Sitzkonsole 20 gegenüber der Positioniervorrichtung 10. Diese Anordnung definiert eine kurvenförmige Bewegungsbahn, entlang der die Sitzkonsole 20 positioniert werden kann. Außerhalb der Bewegungsbahn ist ein Positionieren der Sitzkonsole 20 nicht möglich. In Figur 2 befindet sich die Sitzkonsole 20 in seiner Grundposition, also in der Position, in der ein Fahrzeugführer, der auf dem Sitz 21 sitzt, in Fahrtrichtung ausgerichtet wäre. Dabei ist die Vorderkante 20a der Sitzkonsole 20 orthogonal zur Fahrtrichtung. An der Sitzkonsole 20 ist ein Betätigungselement 32 angeordnet, mit dem die die Position der Sitzkonsole 20 gegenüber der Positioniervorrichtung 10 freigegeben bzw. fixiert werden kann.

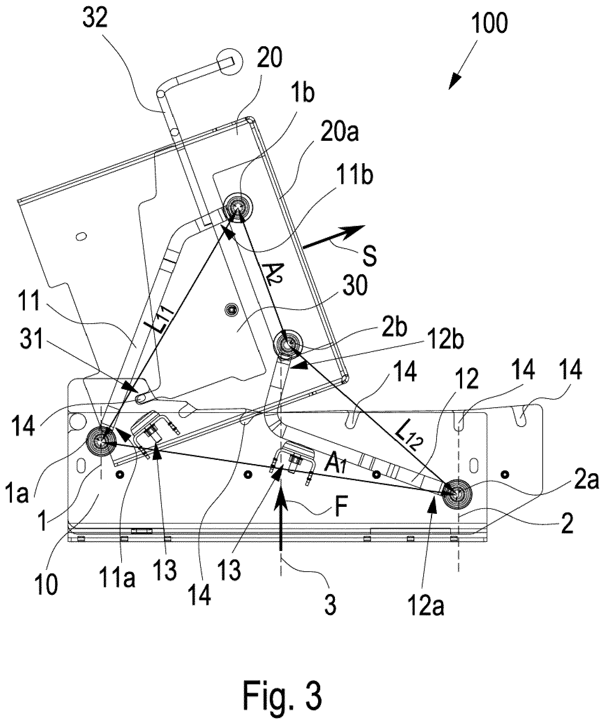

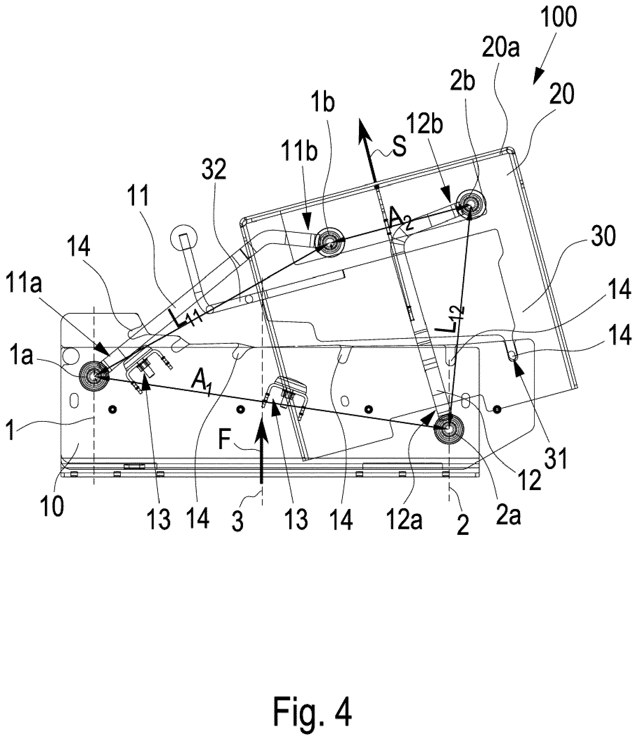

Den Figuren 3 und 4 ist der Aufbau und die Funktionsweise der Sitzvorrichtung 100 gemäß der bevorzugten Ausführungsform der Erfindung im Detail zu entnehmen, wobei sämtliche verdeckte Kanten als durchgehende Linien gezeigt sind. Der erste Schwenkarm 11 weist ein erstes Ende 11a und ein zweites Ende 11b auf. Das erste Ende 11a ist mittels eines ersten Drehgelenks 1a an der Positioniervorrichtung 10 ortsfest gelagert. Das zweite Ende 11b ist mittels eines zweiten Drehgelenks 1b mit der Sitzkonsole 20 verbunden. Der Abstand zwischen dem ersten und dem zweiten Drehgelenk 1a, 1b des ersten Schwenkarms 11 definiert der Abstand L₁₁. Der zweite Schwenkarm 12 weist ein erstes Ende 12a und ein zweites Ende 12b auf. Das erste Ende 12a ist mittels eines ersten Drehgelenks 2a an der Positioniervorrichtung 10 ortsfest gelagert. Das zweite Ende 12b ist mittels eines zweiten Drehgelenks 2b mit der Sitzkonsole 20 verbunden. Der Abstand zwischen dem ersten und dem zweiten Drehgelenk 2a, 2b des zweiten Schwenkarms 12 definiert der Abstand L₁₂. Der erste Schwenkarm 11 und der zweite Schwenkarm 12 sind in einer Ebene angeordnet und, zur Vermeidung einer Kollision der Schwenkarme 11, 12 während des Positionierens der Sitzkonsole 20, gewinkelt ausgeführt. Ferner kreuzen sich die Schwenkarme 11, 12 bei der Positionierung der Sitzkonsole 20 entlang des gesamten Verlaufs der kurvenförmigen Bewegungsbahn nicht.

Die Sitzkonsole 20 ist relativ zur Positioniervorrichtung 10, und damit auch relativ zum Führerhaus 200 der Baumaschine, bewegbar. Die Positionierbewegung der Sitzkonsole 20 erfolgt in einer Ebene und umfasst sowohl eine Sitzverschiebung als auch eine Sitzdrehung. Gemäß der bevorzugten Ausführungsform entspricht die Längsmittelebene 3 der Positioniervorrichtung 10 der Längsmittelebene der Baumaschine.

Die zweiten Drehgelenke 1b, 2b der Schwenkarme 11, 12 sind in Sitzrichtung S mit gleichem Abstand von der Vorderkante 20a der Sitzkonsole 20 beabstandet. Mit anderen Worten, verläuft die Verbindungslinie der beiden an der Sitzkonsole 20 angeordneten zweiten Drehgelenke 1b, 2b der Schwenkarme 11, 12 parallel zur Vorderkante 20a der Sitzkonsole 20. In einer Grundposition der Sitzkonsole 20, in der die Sitzrichtung S der Fahrtrichtung F entspricht, verläuft die Vorderkante 20a der Sitzkonsole 20 und die Verbindungslinie der zweiten Drehgelenke 1b, 2b orthogonal zur Längsmittelebene 3 und zur Fahrtrichtung.

Die zweiten Drehgelenke 1b, 2b weisen einen Abstand A₂ auf, wobei gilt: L₁₁ > A₂ > 0,5L₁₁ und L₁₂ > A₂ > 0,5L₁₂. Ferner weisen die ersten Drehgelenke 1a, 2a einen Abstand A₁ auf, wobei gilt: A₁ > L₁₁ und A₁ > L₁₂.

Gemäß der bevorzugten Ausführungsform der Sitzvorrichtung 100 sind ferner die Abstände L₁₁ und L₁₂ voneinander verschieden. Ferner sind die ersten Drehgelenke 1a, 2a der Schwenkarme 11, 12 in Fahrtrichtung F versetzt zueinander angeordnet.

Das zweite Drehgelenk 1b des ersten Schwenkarms 11 befindet sich bei der Bewegung der Sitzkonsole 20 stets zwischen einer ersten Ebene 1 und einer zweiten Ebene 2, wobei die erste Ebene 1 parallel zur Längsmittelebene 3 liegt und sich durch das erste Drehgelenk 1a des ersten Schwenkarms 11 erstreckt, und wobei die zweite Ebene 2 parallel zur Längsmittelebene 3 liegt und sich durch das erste Drehgelenk 2a des zweiten Schwenkarms 12 erstreckt. Ferner befindet sich das zweite Drehgelenk 2b des zweiten Schwenkarms 12 bei der Bewegung der Sitzkonsole 20 zwischen der ersten und zweiten Ebene 1, 2 (vgl. Figur 3) sowie auf der von der ersten Ebene 1 abgewandten Seite der zweiten Ebene 2 (vgl. Figur 4).

Durch diese Anordnung wird erreicht, dass bei einer Bewegung der Sitzkonsole 20 aus der Grundposition in Fahrtrichtung F nach links, der erste Schwenkarm 11 die Sitzkonsole 20 am zweiten Drehgelenk 1b des ersten Schwenkarms 11 von der Positioniervorrichtung 10 wegdrückt, wodurch ein Drehen der Sitzkonsole 20 nach rechts (in mathematisch negative Richtung) erfolgt. Umgekehrt, wird bei einer Bewegung der Sitzkonsole 20 aus der Grundposition in Fahrtrichtung F nach rechts, erreicht, dass der erste Schwenkarm 11 die Sitzkonsole 20 am zweiten Drehgelenk 1b des ersten Schwenkarms 11 zur Positioniervorrichtung 10 hin zieht, wodurch ein Drehen der Sitzkonsole 20 nach links (in mathematisch positive Richtung) erfolgt.

Mit anderen Worten, definiert diese Anordnung eine kurvenförmige Bewegungsbahn der Sitzkonsole 20 auf der die Sitzkonsole 20 bei der Positionierung ausgehend von einer Grundposition, bei der die Sitzkonsole 20 in Fahrtrichtung F ausgerichtet ist bzw. die Sitzrichtung S der Fahrtrichtung F entspricht, von der Längsmittelebene 3 nach außen und nach vorne in Fahrtrichtung F bewegt und dabei gleichzeitig nach innen zur Längsmittelebene 3 hin eingedreht wird. Die Sitzkonsole 20 wird somit beim Positionieren aus Sicht eines Fahrzeugführers ausgehend von der Grundposition nach vorne links bzw. vorne rechts verschoben und gleichzeitig nach rechts bzw. links eingedreht.

An der Positioniervorrichtung 10 ist ferner eine Begrenzungseinrichtung vorgesehen, die aus zwei Anschlägen 13 gebildet ist. Die Bewegungsbahn der Sitzkonsole 20 wird durch die Position der Anschläge 13 begrenzt. In Figur 3 befindet sich die Sitzkonsole 20 in linksseitiger Endposition und ist gegenüber der Fahrtrichtung F nach links verschoben und um 70° nach rechts gedreht. In der linksseitigen Endposition schlägt der zweite Schwenkarm 12 an einem der Anschläge 13 an. Die weitere Bewegung nach links ist somit begrenzt.

In Figur 4 befindet sich die Sitzkonsole 20 in rechtsseitiger Endposition und ist gegenüber der Fahrtrichtung F nach rechts verschoben und um 15° nach links gedreht. In der rechtsseitigen Endposition schlägt der erste Schwenkarm 11 an dem anderen der Anschläge 13 an. Die weitere Bewegung nach rechts ist somit begrenzt.

Bei der Festlegung der Position der Anschläge 13 ist zur Vermeidung von Kollisionen auf die räumlichen Gegebenheiten im einem Führerhaus 200 einer Baumaschine, in der die Sitzvorrichtung 100 eingesetzt wird, abzustellen. Gemäß der bevorzugten Ausführungsform der erfindungsgemäßen Sitzvorrichtung 100 weisen die Anschläge 13 Pufferelemente auf, die aus einem elastischen Material gebildet sind. Durch das Vorsehen von Pufferelementen aus einem elastischen Material an den Anschlägen 13 wird ein unsanftes Anschlagen der Schwenkarme 11, 12 an die Anschläge 13 vermieden. Dadurch wird der Komfort und die Sicherheit der Sitzvorrichtung 100 erhöht.

Die Sitzkonsole 20 weist ferner eine Feststellvorrichtung 30 auf, mit der die Position der Sitzkonsole 20 auf der vorgesehenen Bewegungsbahn feststellbar ist. Die Feststellvorrichtung 30 umfasst eine Platte mit einem Arretierelement 31, das durch einen Vorsprung gebildet ist. Die Positioniervorrichtung 10 weist Aussparungen 14 auf, in die der Vorsprung formschlüssig eingreifen kann, um die Position der Sitzkonsole 20 festzustellen. Die Feststellvorrichtung 30 wird mittels eines Betätigungselements 32, das durch einen Hebel gebildet ist, bedient, welches ein Herbeiführen und Aufheben einer Feststellung ermöglicht. Die Platte der Feststellvorrichtung 30 kann dabei über ein Scharnier an der Sitzkonsole 20 befestigt sein, wobei zwischen der Platte und der Sitzkonsole 20 eine Druckfeder vorgesehen sein kann, die den Vorsprung der Platte in die Löcher drückt und somit einen Formschluss herstellt. Mit dem Betätigungselement 32 kann die Platte in Richtung der Sitzkonsole 20 gedrückt werden, wobei die Druckfeder zusammengedrückt wird und der Vorsprung der Platte aus den Löchern gehebelt wird. Dadurch wird die Feststellung aufgehoben und ein Fahrzeugführer kann die Sitzkonsole 20 zusammen mit dem Sitz 21 in eine gewünschte Position positionieren.

Gemäß der bevorzugten Ausführungsform der Erfindung sind sechs Aussparungen 14 in der Grundplatte der Positioniervorrichtung 10 gebildet, die aus der Sicht eines auf dem Sitz 21 sitzenden Fahrzeugführers, der mit Blickrichtung in Fahrtrichtung positioniert ist, die folgenden Positionen des Sitzes 21 bzw. der Sitzkonsole 20 definieren:
- Verschiebung des Sitzes 21 bzw. der Sitzkonsole 20 nach links und Drehung des Sitzes 21 bzw. der Sitzkonsole 20 um 70° nach rechts,
- Verschiebung des Sitzes 21 bzw. der Sitzkonsole 20 nach links und Drehung des Sitzes 21 bzw. der Sitzkonsole 20 um 55° nach rechts,
- Verschiebung des Sitzes 21 bzw. der Sitzkonsole 20 nach links und Drehung des Sitzes 21 bzw. der Sitzkonsole 20 um 40° nach rechts,
- Verschiebung des Sitzes 21 bzw. der Sitzkonsole 20 nach links und Drehung des Sitzes 21 bzw. der Sitzkonsole 20 um 20° nach rechts,
- Grundposition,
- Verschiebung des Sitzes 21 bzw. der Sitzkonsole 20 nach rechts und Drehung des Sitzes 21 bzw. der Sitzkonsole 20 um 15° nach links.

Mit der Sitzvorrichtung 100 gemäß der bevorzugten Ausführungsform der vorliegenden Erfindung lässt sich eine Sitzkonsole 20 mit einem darauf angeordneten Sitz 21 in vorteilhafter Weise in einem einzigen Arbeitsschritt positionieren. Die Positionierung erfolgt entlang einer konstruktionsbedingt vordefinierten kurvenförmigen Bewegungsbahn, entlang der Kollisionsfreiheit gewährleistet ist. Insbesondere eine Kollision von am Sitz 21 angeordneten Bedienelementen mit dem Führerhaus 200 des Fahrzeugführers kann dadurch effektiv vermieden werden. Die Betriebssicherheit sowie der Bedienkomfort ist somit gegenüber bekannten Sitzvorrichtungen deutlich erhöht.

## Patentansprüche

1. Baumaschine mit einer Sitzvorrichtung (100), wobei die Sitzvorrichtung (100) eine Positioniervorrichtung (10) und eine Sitzkonsole (20) mit einem darauf angeordneten Sitz (21) aufweist,
wobei die Positioniervorrichtung (10) einen ersten Schwenkarm (11) und einen zweiten Schwenkarm (12) zum Führen der Sitzkonsole (20) entlang einer kurvenförmigen Bewegungsbahn aufweist, wobei die Schwenkarme (11, 12) jeweils ein erstes Ende (11a, 12a) und ein zweites Ende (11b, 12b) aufweisen, wobei das jeweils erste Ende (11a, 12a) der Schwenkarme (11, 12) über jeweils ein erstes Drehgelenk (1a, 2a) an der Positioniervorrichtung (10) gelagert ist, wobei die ersten Drehgelenke (1a, 2a) der Schwenkarme (11, 12) einen Abstand A₁ aufweisen, und das jeweils zweite Ende (11b, 12b) der Schwenkarme (11, 12) voneinander beabstandet über jeweils ein zweites Drehgelenk (1b, 2b) mit der Sitzkonsole (20) verbunden ist, wobei die zweiten Drehgelenke (1b, 2b) der Schwenkarme (11, 12) einen Abstand A₂ aufweisen, wobei der Abstand des ersten Drehgelenks (1a) des ersten Schwenkarms (11) zum zweiten Drehgelenk (1b) des ersten Schwenkarms (11) L₁₁ ist, und der Abstand des ersten Drehgelenks (2a) des zweiten Schwenkarms (12) zum zweiten Drehgelenk (2b) des zweiten Schwenkarms (12) L₁₂ ist, und wobei die ersten Drehgelenke (1a, 2a) in Fahrtrichtung versetzt zueinander angeordnet sind und/oder L₁₁ ≠ L₁₂ gilt, wobei die Sitzkonsole (20) beim Positionieren ausgehend von einer Grundposition entlang der kurvenförmigen Bewegungsbahn bewegt wird und dabei nach innen zu einer Längsmittelebene der Positioniervorrichtung (10) hin eingedreht wird,
**dadurch gekennzeichnet,**
**dass** die Sitzkonsole beim Positionieren aus Sicht eines Fahrzeugführers ausgehend von der Grundposition nach vorne links verschoben und gleichzeitig nach rechts eingedreht wird in Richtung einer linksseitigen Endposition und nach vorne rechts verschoben und nach links eingedreht wird in Richtung einer rechtsseitigen Endposition,
wobei die Sitzkonsole in der linksseitigen Endposition um mindestens 70° nach rechts gedreht ist und in der rechtsseitigen Endposition um mindestens 15° nach links gedreht.

2. Baumaschine nach Anspruch 1, **dadurch gekennzeichnet, dass** die kurvenförmige Bewegungsbahn, auf der die Sitzkonsole (20) positionierbar ist, in einer Ebene orthogonal zur Längsmittelebene der Positioniervorrichtung (10) liegt.

3. Baumaschine nach Anspruch 1 oder 2, **dadurch gekennzeichnet, dass** sich der erste Schwenkarm (11) und der zweite Schwenkarm (12) bei der Positionierung der Sitzkonsole entlang des gesamten Verlaufs der kurvenförmigen Bewegungsbahn nicht kreuzen.

4. Baumaschine nach einem der Ansprüche 1 bis 3, **dadurch gekennzeichnet, dass** die zweiten Drehgelenke (1b, 2b) der Schwenkarme (11, 12) in Sitzrichtung (S) mit gleichem Abstand von der Vorderkante (20a) der Sitzkonsole (20) beabstandet sind.

5. Baumaschine nach einem der Ansprüche 1 bis 4, **dadurch gekennzeichnet, dass** gilt: L₁₁ > A₂ > 0,1L₁₁ und/oder L₁₂ > A₂ > 0,1L₁₂.

6. Baumaschine nach einem der Ansprüche 1 bis 5, **dadurch gekennzeichnet, dass** sich das zweite Drehgelenk (1b) des ersten Schwenkarms (11) bei der Bewegung der Sitzkonsole (20) stets zwischen einer ersten Ebene (1) und einer zweiten Ebene (2) befindet, wobei die erste Ebene (1) parallel zur Längsmittelebene der Positioniervorrichtung (10) liegt und sich durch das erste Drehgelenk (1a) des ersten Schwenkarms (11) erstreckt, und wobei die zweite Ebene (2) parallel zur Längsmittelebene der Positioniervorrichtung (10) liegt und sich durch das erste Drehgelenk (2a) des zweiten Schwenkarms (12) erstreckt.

7. Baumaschine nach einem der Ansprüche 1 bis 6, **dadurch gekennzeichnet, dass** gilt: A₁ > 0,5L₁₁ und A₁ > 0,5L₁₂.

8. Baumaschine nach einem der Ansprüche 1 bis 7, **dadurch gekennzeichnet, dass** die Positioniervorrichtung (10) eine Begrenzungseinrichtung aufweist, durch die Bewegungsbahn der Sitzkonsole (20) begrenzt ist.

9. Baumaschine nach Anspruch 8, **dadurch gekennzeichnet, dass** die Begrenzungseinrichtung aus mindestens zwei Anschlägen (13) gebildet ist, wobei die Bewegungsbahn der Sitzkonsole (20) in jede Bewegungsrichtung durch mindestens einen Anschlag (13) begrenzt ist, wobei vorzugsweise die mindestens zwei Anschläge (13) Pufferelemente aufweisen.

10. Baumaschine nach einem der Ansprüche 1 bis 9, **gekennzeichnet durch** eine Feststellvorrichtung (30), mit der die Position der Sitzkonsole (20) gegenüber der Positioniervorrichtung (10) feststellbar ist, wobei vorzugsweise die die Feststellvorrichtung (30) an der Sitzkonsole (20) angeordnet ist.

11. Baumaschine nach Anspruch 10, **dadurch gekennzeichnet, dass** die Positioniervorrichtung (10) eine Grundplatte mit mindestens einer Aussparung (14) aufweist, und die Feststellvorrichtung (30) ein Arretierelement (31) aufweist, wobei die Position der Sitzkonsole (20) gegenüber der Positioniervorrichtung (10) durch ein Eingreifen des Arretierelements (31) in die mindestens eine Aussparung (14), feststellbar ist.

12. Baumaschine nach Anspruch 11, **dadurch gekennzeichnet, dass** die Grundplatte der Positioniervorrichtung (10) mindestens drei Aussparungen (14) aufweist, wobei die linksseitige Endposition, die rechtsseitige Endposition und die Grundposition der Sitzkonsole (20) durch jeweils eine Aussparung (14) vorgegeben ist.

13. Baumaschine nach einem der Ansprüche 9 bis 12, **dadurch gekennzeichnet, dass** die Feststellvorrichtung (30) ein Betätigungselement (32) zum Herbeiführen und Aufheben einer Feststellung, aufweist.

14. Baumaschine nach einem der Ansprüche 1 bis 13, **dadurch gekennzeichnet, dass** der erste und/oder zweite Schwenkarm (11, 12) eine abgewinkelte und/oder gebogene Form aufweist.

## Claims

1. A construction machine having a seat device (100), the seat device (100) comprising a positioning device (10) and a seat console (20) having a seat (21) arranged thereon,
wherein the positioning device (10) comprises a first pivot arm (11) and a second pivot arm (12) for guiding the seat console (20) along a curved trajectory, wherein the pivot arms (11, 12) respectively comprise a first end (11a, 12a) and a second end (11b, 12b), wherein the respective first end (11a, 12a) of the pivot arms (11, 12) is supported on the positioning device (10) via a respective first rotary joint (1a, 2a), wherein the first rotary joints (1a, 2a) of the pivot arms (11, 12) have a distance A₁ and the respective second end (11b, 12b) of the pivot arms (11, 12) is connected to the seat console (20) via a respective second rotary joint (1b, 2b) in a manner as spaced apart from each other, wherein the second rotary joints (1b, 2b) of the pivot arms (11, 12) have a distance A₂, wherein the distance of the first rotary joint (1a) of the first pivot arm (11) to the second rotary joint (1b) of the first pivot arm (11) is L₁₁, and the distance of the first rotary joint (2a) of the second pivot arm (12) to the second rotary joint (2b) of the second pivot arm (12) is L₁₂, and wherein the first rotary joints (1a, 2a) are offset from each other in the direction of travel and/or L₁₁ ≠ L₁₂, wherein, during positioning, the seat console (20) is moved, starting from a basic position, along the curved trajectory and, in doing so, is rotated inward toward a longitudinal center plane of the positioning device (10)
**characterized in that**
during positioning, as seen from the view of a vehicle driver, the seat console is displaced, starting from the basic position, in a forward left direction and is simultaneously rotated to the right towards a left-hand end position and is displaced in a forward right direction and is rotated to the left towards a right-hand end position, wherein the seat console, in its left-hand end position, is rotated to the right by at least 70° and, in its right-hand end position, is rotated to the left by at least 15°.

2. The construction machine according to claim 1, **characterized in that** the curved trajectory along which the seat console (20) is adapted to be positioned lies in a plane orthogonal to the longitudinal center plane of the positioning device (10).

3. The construction machine according to claim 1 or 2, **characterized in that** the first pivot arm (11) and the second pivot arm (12) do not intersect each other when the seat console is positioned along the entire course of the curved trajectory.

4. The construction machine according to any one of claims 1 to 3, **characterized in that** the second rotary joints (1b, 2b) of the pivot arms (11, 12) are spaced apart at the same distance from the front edge (20a) of the seat console (20), as seen in the seat direction (S).

5. The construction machine according to any one of claims 1 to 4, **characterized in that** the following applies: L₁₁ > A₂ > 0.1L₁₁ and/or L₁₂ > A₂ > 0.1L₁₂.

6. The construction machine according to any one of claims 1 to 5, **characterized in that** the second rotary joint (1b) of the first pivot arm (11) is always located between a first plane (1) and a second plane (2) when the seat console (20) is moved, wherein the first plane (1) lies in parallel to the longitudinal center plane of the positioning device (10) and extends through the first rotary joint (1a) of the first pivot arm (11), and wherein the second plane (2) lies in parallel to the longitudinal center plane of the positioning device (10) and extends through the first rotary joint (2a) of the second pivot arm (12).

7. The construction machine according to any one of claims 1 to 6, **characterized in that** the following applies: A₁ > 0.5L₁₁ and A₁ > 0.5L₁₂.

8. The construction machine according to any one of claims 1 to 7, **characterized in that** the positioning device (10) comprises a limiting means which limits the trajectory of the seat console (20).

9. The construction machine according to claim 8, **characterized in that** the limiting means is made up of at least two stops (13), wherein the trajectory of the seat console (20) is limited by at least one stop (13) in every direction of movement, wherein preferably the at least two stops (13) comprise buffer elements.

10. The construction machine according to any one of claims 1 to 9, **characterized by** a locking device (30) with the aid of which the position of the seat console (20) is adapted be locked relative to the positioning device (10), wherein preferably the locking device (30) is arranged at the seat console (20).

11. The construction machine according to claim 10, **characterized in that** the positioning device (10) comprises a base plate having at least one recess (14) and the locking device (30) comprises a fixing element (31), wherein the position of the seat console (20) relative to the positioning device (10) is adapted to be locked by the fixing element (31) engaging in the at least one recess (14).

12. The construction machine according to claim 11, **characterized in that** the base plate of the positioning device (10) comprises at least three recesses (14), wherein a left-hand end position, a right-hand end position and the basic position of the seat console (20) are defined by a respective recess (14).

13. The construction machine according to any one of claims 9 to 12, **characterized in that** the locking device (30) comprises an actuating element (32) for locking and unlocking purposes.

14. The construction machine according to any one of claims 1 to 13, **characterized in that** the first and/or the second pivot arm (11, 12) have an angled and/or bent shape.

## Revendications

1. Engin de chantier doté d'un dispositif de siège (100), dans lequel le dispositif de siège (100) comporte un dispositif de positionnement (10) et une console de siège (20) avec un siège disposé sur celle-ci (21),
dans lequel le dispositif de positionnement (10) comporte un premier bras pivotant (11) et un deuxième bras pivotant (12) destinés à guider la console de siège (20) le long d'une trajectoire en forme de courbe, dans lequel les bras pivotants (11, 12) comportent respectivement une première extrémité (11a, 12a) et une deuxième extrémité (11b, 12b), dans lequel chaque première extrémité respective (11a, 12a) des bras pivotants (11, 12) est montée sur le dispositif de positionnement (10) par le biais d'un premier pivot (1a, 2a) respectif, dans lequel les premiers pivots (1a, 2a) des bras pivotants (11, 12) comportent un écart A₁, et chaque deuxième extrémité respective (11b, 12b) des bras pivotants (11, 12) est reliée à la console de siège (20), à distance l'une de l'autre, par le biais d'un deuxième pivot (1b, 2b) respectif, dans lequel les deuxièmes pivots (1b, 2b) des bras pivotants (11, 12) comportent un écart A₂, dans lequel l'écart entre le premier pivot (1a) du premier bras pivotant (11) et le deuxième pivot (1b) du premier bras pivotant (11) est de L₁₁ et l'écart entre le premier pivot (2a) du deuxième bras pivotant (12) et le deuxième pivot (2b) du deuxième bras pivotant (12) est de L₁₂ et dans lequel les premiers pivots (1a, 2a) sont disposés en décalage l'un par rapport à l'autre dans la direction de déplacement et/ou L₁₁ ≠ L₁₂, dans lequel la console de siège (20) est, lors du positionnement, déplacée depuis une position de base le long de la trajectoire en forme de courbe et est ainsi tournée vers l'intérieur en direction d'un plan médian longitudinal du dispositif de positionnement (10),
**caractérisé**
**en ce que**, lors du positionnement, la console de siège est, du point de vue d'un conducteur, déplacée dans la direction avant gauche à partir de la position de base et est en même temps tournée vers la droite dans le sens d'une position finale côté gauche et déplacée dans la direction avant droite à partir de la position de base et est en même temps tournée vers la gauche dans le sens d'une position finale côté droit,
dans lequel la console de siège est, dans la position finale côté gauche, tournée d'au moins 70° vers la droite et, dans la position finale côté droit, tournée d'au moins 15° vers la gauche.

2. Engin de chantier selon la revendication 1, **caractérisé en ce que** la trajectoire en forme de courbe sur laquelle peut être positionnée la console de siège (20) est située dans un plan orthogonal au plan médian longitudinal du dispositif de positionnement (10).

3. Engin de chantier selon la revendication 1 ou 2, **caractérisé en ce que** le premier bras pivotant (11) et le deuxième bras pivotant (12) ne se croisent pas lors du positionnement de la console de siège (20) sur toute la longueur de la trajectoire en forme de courbe.

4. Engin de chantier selon l'une des revendications 1 à 3, **caractérisé en ce que** les deuxièmes pivots (1b, 2b) des bras pivotants (11, 12) ont le même écart par rapport au bord avant (20a) de la console de siège (20) dans la direction d'assise (S).

5. Engin de chantier selon l'une des revendications 1 à 4, caractérisé en ce : L₁₁ > A₂ >0, 1L₁₁ et/ou L₁₂ > A₂ > 0, 1L₁₂.

6. Engin de chantier selon l'une des revendications 1 à 5, **caractérisé en ce que** le deuxième pivot (1b) du premier bras pivotant (11) se trouve constamment entre un premier plan (1) et un deuxième plan (2) lors du déplacement de la console de siège (20), dans lequel le premier plan (1) est parallèle au plan médian longitudinal du dispositif de positionnement (10) et traverse le premier pivot (1a) du premier bras pivotant (11), et dans lequel le deuxième plan (2) est parallèle au plan médian longitudinal du dispositif de positionnement (10) et traverse le premier pivot (2a) du deuxième bras pivotant (12).

7. Engin de chantier selon l'une des revendications 1 à 6, **caractérisé en ce que** : A₁ > 0,5L₁₁ et A1 > 0,5L₁₂.

8. Engin de chantier selon l'une des revendications 1 à 7, **caractérisé en ce que** le dispositif de positionnement (10) comporte un dispositif de délimitation par lequel la trajectoire de la console de siège (20).

9. Engin de chantier selon la revendication 8, **caractérisé en ce que** le dispositif de délimitation est formé d'au moins deux butées (13), dans lequel la trajectoire de la console de siège (20) est délimitée dans chaque direction de déplacement par au moins une butée (13), dans lequel les au moins deux butées (13) comportent de préférence des éléments tampons.

10. Engin de chantier selon l'une des revendications 1 à 9, **caractérisé par** un dispositif de blocage (30) avec lequel la position de la console de siège (20) par rapport au dispositif de positionnement (10) peut être bloquée, dans lequel le dispositif de blocage (30) est de préférence disposé sur la console de siège (20).

11. Engin de chantier selon la revendication 10, **caractérisé en ce que** le dispositif de positionnement (10) comporte un socle avec au moins un évidement (14) et le dispositif de blocage (30) comporte un élément d'arrêt (31), dans lequel la position de la console de siège (20) par rapport au dispositif de positionnement (10) peut être bloquée par une entrée en prise de l'élément d'arrêt (31) dans l'au moins un évidement (14).

12. Engin de chantier selon la revendication 11, **caractérisé en ce que** le socle du dispositif de positionnement (10) comporte au moins trois évidements (14), dans lequel la position finale côté gauche, la position finale côté droit et la position de base de la console de siège (20) sont chacune prédéfinies par un évidement (14) respectif.

13. Engin de chantier selon l'une des revendications 9 à 12, **caractérisée en ce que** le dispositif de blocage (30) comporte un élément d'actionnement (32) pour générer et annuler un blocage.

14. Engin de chantier selon l'une des revendications 1 à 13, **caractérisé en ce que** le premier et/ou le deuxième bras pivotant (11, 12) comporte une forme coudée et/ou courbée.
